# EUROPÄISCHE PATENTANMELDUNG

(11) **EP 1 550 929 A1**
(43) Veröffentlichungstag der Anmeldung: **06.07.2005**
(21) Anmeldenummer: 03029391.4
(22) Anmeldetag: 19.12.2003
(51) Int. Cl.: G06F 1/00

(54) **Verfahren zur Einrichtung und Durchführung gesicherter Transaktionen**

(71) Anmelder: IICS AG Integrated Information & Communication Systems, 90425 Nürnberg (DE); Informatikzentrum der Sparkassenorganisation GmbH, 53227 Bonn (DE)
(72) Erfinder: Papagrigoriou, Paschalis, 90482 Nürnberg (DE)
(74) Vertreter: Hilleringmann, Jochen, Dipl.-Ing.

(57) **Zusammenfassung**

Die Erfindung betrifft ein Verfahren zur Einrichtung und Durchführung gesicherter Transaktionen unter Verwendung von persönlichen Geheimnissen und Softwarekomponenten gehalten in einem hardwaregestützten mobilen Geheimnis- und Datenträger, der über kryptographische und datenspeichernde Funktionalitäten verfügt und weitere Softwarekomponenten gehalten in einem Endgerät. Seine Verwendung erfolgt über drahtlose oder -gebundene bzw. integrierte Datenübertragungsschnittstellen zu mobilen oder stationären Endgeräten, welche über drahtlose oder -gebundene Verbindungen und mit Hilfe einer auf dem mobilen Geheimnis- und Datenträger und dem verwendeten Endgerät verteilten Software mit anderen Serversystemen sicher kommunizieren. Die persönlichen Geheimnisse werden auf dem mobilen Geheimnis- und Datenträger abhängig vom Anwendungsszenario durch unterschiedliche Methoden bereitgestellt und mit Hilfe kryptographischer Verfahren abgelegt.

## Beschreibung

Die Erfindung betrifft ein Verfahren zur Einrichtung und Durchführung gesicherter Transaktionen unter Verwendung von persönlichen Geheimnissen und Softwarekomponenten, gehalten in einem hardwaregestützten Geheimnisund Datenträger mit kryptographischen und speicherrelevanten Funktionalitäten, wie z.B. eine Chipkarte oder eine Flash-Speicherkarte mit integriertem Kryptoprozessor und Softwarekomponenten gehalten auf einem Endgerät.

Die wachsenden Mobilitätsanforderungen, die Entwicklung der Mobilfunktechnologien und die Verbreitung der zugehörigen Endgeräte hat in den letzten Jahren zu steigenden Teilnehmerzahlen im Mobilfunk geführt.

Mit der gleichzeitigen Entwicklung des Internets hat der Austausch von Informationen über insbesondere mobile Endgeräte (z.B. Notebook, XDA, PDA, Smartphone) enorm zugenommen. Dies gilt auch für Transaktionen im Bereich Banking und Payment.

Als Grundlage hierfür werden Techniken und Verfahren, z.B. auf der Basis von Passwörtern, PINs oder digitaler Signatur, eingesetzt, die die Authentizität oder Autorisierung des Teilnehmers gewährleisten.

Die bisherigen Verfahren sind im Hinblick auf die Sicherheit und deren Einsatz im mobilen Umfeld zu komplex aufgebaut, unpraktisch oder nicht sicher. Existierende Lösungen funktionieren durch das Zusammenwirken von prozeduralen Schnittstellen und Rollen verschiedener Organisationen oder den Zusammenschluss von heterogenen Geräten und Infrastrukturen und führen damit zu einer unwirtschaftlichen Situation und somit zu ihrer Nichtdurchsetzbarkeit.

Beispiele sind Entwicklungen, die auf der Koppelung von Sicherheitsmerkmalen von Finanzinstituten und Telekommunikationsunternehmen basieren und die Verwendung von Geräten und Funktionen, wie die einer SIM-Karte eines GSM-Netzes, erfordern.

Die fortschreitende Entwicklung der mobilen Gerätetechnik ermöglicht immer mehr die Ausführung flexibler, individueller Programme.

Ein Produkt der Miniaturisierung und steigenden Speicherkapazitäten sind die Flash-Speicherkarten. Sie haben den Durchbruch geschafft, große Verbreitung gefunden und sind inzwischen Standard in mobilen Endgeräten.

Die Verfügbarkeit von Datenträgern mit integriertem Kryptocontroller und Flash-Speichern erweitert ihre Einsatzfähigkeit in allen Bereichen mit Sicherheitsanforderungen und ermöglichen die Entwicklung neuartiger Anwendungen und Verfahren.

Die der Erfindung zugrunde liegende Aufgabe ist es, Geschäftsvorfälle und Dienstleistungen einfach, kostengünstig und gesichert zu realisieren und einzusetzen.

Bei dem erfindungsgemäßen Verfahren zur gesicherten Umsetzung solcher Transaktionen wird ein mobiler Geheimnis- und Datenträger über eine drahtlose oder -gebundene Schnittstelle an einem mobilen oder stationären Endgerät derart verbunden, dass das Endgerät über seine Schnittstelle (geeigneter Kartenlesertyp) die die Transaktion betreffenden Daten austauscht. Es werden persönliche Geheimnisse sicher gespeichert oder gelesen und Programmteile, abhängig von der benötigten Funktionalität, ausgeführt.

Die gesicherten Geschäftsvorfälle und Dienstleistungen werden sowohl vom Anwender des Endgerätes als auch vom Anbieter eingeleitet. Abhängig vom Anwendungsszenario (Banktransaktionen, Bezahl-, Signierungs- und Verschlüsselungsvorgänge) werden Programmteile sowohl auf das Endgerät als auch auf dem mobilen Geheimnis- und Datenträger installiert.

Der mobile Geheimnis- und Datenträger speichert die für den gesicherten Geschäftsvorfall benötigten Geheimnisse (u.a. Schlüssel, Passwörter) zur Identifikation, Authentisierung, Autorisierung des Anwenders bzw. der Anwendung gegenüber dem Serviceanbieter.

Die Verwendung der hardware-basierten kryptographischen Verfahren erhöht die Sicherheit der auf dem mobilen Geheimnis- und Datenträger gespeicherten Geheimnisse.

Ein weiterer Vorteil ist die gleichzeitige Verwendung des Flash-Speichers für die Speicherung digitaler Informationen in einfacher oder, zusammen mit den auf dem Geheimnis- und Datenträger gespeicherten Geheimnissen, in verschlüsselter Form.

Die Verwendung des mobilen Geheimnis- und Datenträgers kann über das verbundene Endgerät offline erfolgen oder auch online mit Hilfe einer drahtlosen oder drahtgebundenen über das Endgerät eingeleiteten Verbindung zum Service-Anbieter.

Das Management der persönlichen Geheimnisse und deren Hinterlegung und Aktivierung auf dem mobilen Geheimnis- und Datenträger ist abhängig vom Anwendungsszenario und von den Prozessen des beteiligten Anbieters, der nach kundenindividuellen Kriterien und nach seiner Geschäftsstrategie die Geheimnisse generiert, verwaltet und verteilt.

Chipkarten werden bislang z.B. durch ein Finanzinstitut bzw. ein beauftragtes Unternehmen personalisiert und an den Kunden ausgeliefert. Die Schlüssel werden im Zuge der Personalisierung in einer gesicherten Umgebung auf die Karte überspielt. Die vorhandenen Prozesse der damit beauftragten und zugelassenen Organisationen werden auf die erfindungsgemäßen Lösungen übertragen und durch entsprechende Softwarekomponenten auf dem mobilen Geheimnis- und Datenträger unterstützt und verwendet.

Die erfindungsgemäßen mobilen Geheimnis- und Datenträger werden auch über Fachhändler und zunächst unabhängig von einem Anwendungsbereich vertrieben. Zusätzlich zur Ausgabe einer vorpersonalisierten Karte z.B. durch ein Finanzinstitut werden damit auch Szenarien umgesetzt, bei denen die Übertragung der persönlichen Geheimnisse teilweise oder vollständig durch den Anwender des mobilen Geheimnis- und Datenträger durchgeführt wird.

Der Anwender des mobilen Geheimnis- und Datenträger registriert sich für ein Angebot des Serviceanbieters und lädt die benötigten und gesicherten Softwarekomponenten sowie die für diesen bestimmte gesicherten und vom Serviceanbieter generierten, kundenindividuellen Schlüssel und weitere Parameter auf seinen mobilen Geheimnis- und Datenträger.

Auf separatem Weg übermittelt der Serviceanbieter seinem Kunden (Besitzer des mobilen Geheimnis- und Datenträger) einen Code (PIN), mit dem gesicherte Softwarekomponenten, Geheimnisse und weitere Daten auf dem mobilen Geheimnis- und Datenträger entsichert und für die Benutzung aktiviert werden. Dies erfolgt durch Eingabe des Codes in einer speziellen Initialisierungsfunktion.

Um Angriffsszenarien in diesem Ablauf zu minimieren, kann der Lade- und Aktivierungsvorgang in einer geschützten Umgebung (z.B. in den Geschäftsräumen des Serviceanbieters) erfolgen. Dazu ist außer einem Lesegerät für den mobilen Geheimnis- und Datenträger und ein entsprechendes Programm keine weitere Infrastruktur erforderlich. Nach Installation und Aktivierung sind alle sicherheitsrelevanten Daten im geschützten Bereich des mobilen Geheimnis- und Datenträgers sicher abgelegt.

Alternativ werden persönliche Geheimnisse vom Besitzer des mobilen Geheimnis- und Datenträger selbst direkt auf dem mobilen Geheimnis- und Datenträger generiert.

Ausführungsbeispiele der Erfindung werden anhand der beiliegenden Zeichnungen beschrieben. Es zeigen:
- Fig. 1: schematisch eine Struktur mit den beteiligten Komponenten und Schnittstellen gemäss einem Ausführungsbeispiel der Erfindung und
- Fig. 2: eine symbolhafte Darstellung der im Endgerät und auf dem mobilen Geheimnis- und Datenträger beteiligten Software-Komponenten.

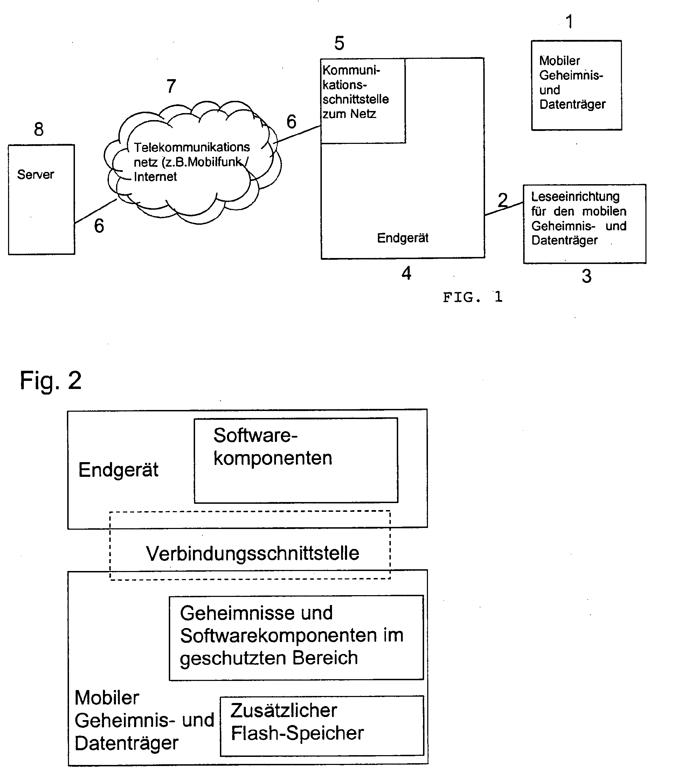

Fig. 1 zeigt schematisch eine Struktur nach einem Ausführungsbeispiel der Erfindung. Das Endgerät 4 ist gekennzeichnet durch eine Kommunikationsschnittstelle zu einer Leseeinrichtung 3, die über eine Kommunikationsverbindung 2 mit dem Endgerät 4 kommuniziert.

Das Endgerät 4 entspricht nach dem heutigen Stand der Technik einem PC, Notebook, XDA, Smartphone oder Mobilephone.

Die Kommunikationsschnittstelle zur Leseeinrichtung 3 wird über einen geeigneten Kartenleser realisiert, der in das Endgerät integriert ist oder sich außerhalb des Endgerätes befindet. Die entsprechende Kommunikationsverbindung 2 ist entweder drahtgebunden (z.B. seriell, USB etc.) oder drahtlos (z.B. Infrarot (IrDa), Bluetooth etc.).

Der mobile Geheimnis- und Datenträger 1 wird nach dem heutigen Stand der Technik mit einem mobilen Speichermedium realisiert, welches mindestens einen Kryptoprozessor für den gesicherten Bereich der Geheimnisse und Daten und vorzugsweise einen Flash-Speicher enthält und eine entsprechende Kommunikation zum Endgerät 4 über die Leseeinrichtung 3 möglich ist.

Das Endgerät 4 ist durch eine zweite Kommunikationsschnittstelle zum Netz 5 gekennzeichnet. Über diese Schnittstelle kommuniziert das Endgerät 4 mit einem drahtgebundenen (z.B. ISDN, DSL etc.) oder drahtlosen (z.B. GSM, GPRS, UMTS etc.) Kommunikationsmedium 6 über den Kommunikationsträger Telekommunikationsnetz (z.B. Mobilfunk/Internet) 7.

Der Kommunikationspartner wird abstrakt Server 7 genannt, der über das gleiche Kommunikationsmedium 6 an den Kommunikationsträger Telekommunikationsnetz (z.B. Mobilfunk/Internet) 7 angebunden ist. Der Server 7 wird in Ausführungsbeispielen ein Host-System aber auch ein weiteres mobiles Endgerät, ähnlich dem dargestellten Endgerät 4 sein.

Fig. 2 zeigt symbolhaft eine Darstellung der Software-Komponenten des mobilen Geheimnis- und Datenträgers und des Endgerätes. Sowohl das Endgerät als auch der mobile Träger haben für die erfindungsgemäße Lösung und abhängig vom Anwendungsfall geeignete Softwarekomponenten. Diese sind notwendig, um die Programmteile (ausführbare, treibende etc.) zu integrieren. Die ausführbaren Programmteile sind als beispielhafte Ausführungsform Java-Applets mit Funktionalitäten wie TAN-Generator, Dig. Signatur etc.

## Patentansprüche

1. Verfahren zur Einrichtung und Durchführung gesicherter Transaktionen unter Verwendung von Softwarekomponenten gehalten auf einem Endgerät und von persönlichen Geheimnissen und weiteren Softwarekomponenten gehalten in einem hardwaregestützten mobilen Geheimnis- und Datenträger mit kryptographischen und datenspeichernden Funktionalitäten, der mit einem Endgerät leitungsgebunden oder drahtlos kommuniziert, **dadurch gekennzeichnet, dass**
A. Softwarekomponenten zur Bereitstellung und Personalisierung von persönlichen Geheimnissen und zur Erbringung der Leistung gesicherter Transaktionen auf dem mobilen Geheimnis- und Datenträger in einem geschützten Speicherbereich und auf dem Endgerät installiert sind.
B. die benötigten Geheimnisse auf dem mobilen Geheimnis- und Datenträger nach mindestens einer der nachfolgenden Vorgehensweisen bereitgestellt und mit einem kryptographischen Verfahren abgelegt sind:
a. Ein mobiler Geheimnis- und Datenträger, welcher bereits Geheimnisse enthält, die seitens eines Service-Anbieters für einen Anwender personalisiert wurden, wird an diesen ausgehändigt.
b. Die benötigten Geheimnisse werden nach Vorlage des mobilen Geheimnis- und Datenträgers, welchen der Anwender bereits besitzt, beim Service-Anbieter durch diesen personalisiert.
c. Die benötigten Geheimnisse werden mit Hilfe von installierten Softwarekomponenten und den Aufbau einer Kommunikationsverbindung zum Service-Anbieter und von diesem zum Anwender übertragen und auf dem mobilen Geheimnis- und Datenträger personalisiert .
d. Die benötigten Geheimnisse werden mit Hilfe von installierten Softwarekomponenten auf dem mobilen Geheimnis- und Datenträger durch den Anwender generiert und durch Registrierung beim Service-Anbieter personalisiert.
e. Als Geheimnisse wird auf dem mobilen Geheimnis- und Datenträger bereits existierendes Geheimnismaterial verwendet, das vom Anwender mit Hilfe von installierten Softwarekomponenten durch Registrierung beim Service-Anbieter personalisiert wird.

2. Verfahren nach Anspruch 1, **dadurch gekennzeichnet, dass** der Anwender über das Endgerät durch die Eingabe einer Identifikationszeichenfolge (z.B. PIN, Passwort) sich gegenüber dem mobilen Geheimnis- und Datenträger identifiziert oder authentisiert wird.

3. Verfahren nach einem der Ansprüche 1 bis 2, **dadurch gekennzeichnet, dass** die auf dem mobilen Geheimnis- und Datenträger gespeicherten persönlichen Geheimnisse und Informationen von unterschiedlichen Endgeräten über leitungsgebundene oder drahtlose Kommunikation mit den entsprechend installierten Softwarekomponenten lesbar und verwendbar sind.

4. Verfahren nach einem der Ansprüche 1 bis 3, **dadurch gekennzeichnet, dass** Softwarekomponenten für gesicherte Transaktionen in Anwendungsszenarien für Banking-Geschäftsvorfälle, Bezahl-, Signierungs- und Verschlüsselungsvorgänge jeweils über das Endgerät installierbar und aufrufbar sind.

5. Verfahren nach einem der Ansprüche 1 bis 3, **dadurch gekennzeichnet, dass** Softwarekomponenten für die Erzeugung von einmalig verwendbaren Ziffern- und/oder Zeichenfolgen zu Authentikationszwecken installierbar und aufrufbar sind, insbesondere gemäß der TAN-Generatorspezifikation nach ZKA.

6. Verfahren nach einem der Ansprüche 1 bis 4, **dadurch gekennzeichnet, dass** die Durchführung einer gesicherten Transaktion durch den Aufbau einer leitungsgebundenen oder drahtlosen Kommunikationsverbindung zwischen Endgerät und einem Service-Anbieter erfolgt (Fig. 1).

7. Verfahren nach einem der Ansprüche 1 bis 3, **dadurch gekennzeichnet, dass** auf dem mobilen Geheimnis- und Datenträger weitere Nutzdaten, wie z.B. auf einem Flash-Speicher, in einfacher oder durch Verwendung der auf diesem enthaltenen persönlichen Geheimnisse in verschlüsselter Form ablegbar und anwendbar sind.
